Europäisches Patentamt

European Patent Office

Office européen des brevets

(19)

(11) EP 1 193 823 A2

(12) **EUROPEAN PATENT APPLICATION**

(43) Date of publication:
03.04.2002 Bulletin 2002/14

(51) Int Cl.$^7$: **H02H 3/46**

(21) Application number: 01000499.2

(22) Date of filing: 26.09.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **29.09.2000 FI 20002156**

(71) Applicant: **ABB Substation Automation Oy**
**65320 Vaasa (FI)**

(72) Inventors:
• **Lehtinen, Reijo**
**33100, Tampere (FI)**
• **Kankaanpää, Janne**
**66999 Vaasa (FI)**

(74) Representative: **Kaukonen, Juha Veikko**
**Kolster Oy Ab,**
**Iso Roobertinkatu 23,**
**P.O. Box 148**
**00121 Helsinki (FI)**

(54) **Method for frequency protection of electric network component, and frequency relay**

(57) A method for frequency protection of a component in an electric network, and a frequency relay, the frequency protection comprising determining an estimate (F) for network frequency, calculating an estimate (dfdt) for the frequency change rate on the basis of two non-simultaneous frequency estimates (F), filtering the estimate (dfdt) for the frequency change rate by determining a restricted value (dfdt$_{lim}$) of the estimate (dfdt) for the frequency change rate, and filtering the restricted value (dfdt$_{lim}$) of the estimate for the frequency change rate by a digital filter (7). The filtered estimate (DFDT) for the frequency change rate is compared to a predetermined starting threshold (DFDT$_{HighLimit}$) for the rate of rise of the frequency change rate and/or to a starting threshold (DFDT$_{LowLimit}$) for the rate of fall. When the filtered estimate (DFDT) for the frequency change rate falls below the starting threshold (DFDT$_{LowLimit}$) for the rate of fall of the frequency change rate or exceeds the starting threshold (DFDT$_{HighLimit}$) for the rate of rise, a protective function is activated in order to disconnect the component to be protected from the electric network.

Furthermore, a method for frequency protection of a component in an electric network, and a frequency relay, which method and frequency relay comprise determining a restricted value (F$_{lim}$) of an estimate (F) for the network frequency, the restricted value being filtered by a digital filter (7). The filtered frequency estimate (FT) is compared to a predetermined starting threshold (FT$_{HighLimit}$) for overfrequency and/or to a starting threshold (FT$_{LowLimit}$) for underfrequency. When the filtered frequency estimate (FT) falls below the starting threshold (FT$_{LowLimit}$) for underfrequency or exceeds the starting threshold (FT$_{HighLimit}$) for overfrequency, a protective function is activated in order to disconnect the component to be protected from the electric network.

FIG. 1

EP 1 193 823 A2

**Description**

The invention relates to a method of filtering an estimate for frequency change rate in frequency protection of a component in an electric network, the frequency protection comprising determining an estimate for network frequency on the basis of a measurement signal measured from the electric network, calculating an estimate for frequency change rate on the basis of two non-simultaneous frequency estimates, filtering the estimate for the frequency change rate, comparing the filtered estimate for the frequency change rate to a predetermined starting threshold for the rate of rise of the frequency change rate and/or to a starting threshold for the rate of fall, and when the filtered estimate for the frequency change rate falls below the starting threshold for the rate of fall of the frequency change rate or exceeds the starting threshold for the rate of rise, a protective function is activated in order to disconnect the component to be protected from the electric network.

The invention also relates to a frequency relay for frequency protection of a component in an electric network, the protective function of the frequency relay being based on the frequency change rate, the frequency relay comprising an estimating device for determining an estimate for the network frequency on the basis of a measurement signal measured from the electric network, a calculating device for calculating an estimate for the frequency change rate on the basis of two nonsimultaneous frequency estimates, a filtering device for determining the filtered value of the estimate for the frequency change rate, and a comparing device for comparing the filtered value of the estimate for the frequency change rate to a predetermined starting threshold for the rate of fall of the estimate for the frequency change rate and/or to a starting threshold for the rate of rise, such that when the filtered value of the estimate for the frequency change rate falls below the starting threshold for the rate of fall or exceeds the starting threshold for the rate of rise, a protective function is activated in order to disconnect the component to be protected from the network.

The invention further relates to a method of filtering a frequency estimate in frequency protection of a component in an electric network, the frequency protection comprising determining an estimate for the network frequency on the basis of a measurement signal measured from the electric network, filtering the frequency estimate, comparing the filtered frequency estimate to a predetermined starting threshold for overfrequency and/or to a starting threshold for underfrequency, and when the filtered frequency estimate falls below the starting threshold for underfrequency or exceeds the starting threshold for overfrequency, a protective function is activated in order to disconnect the component to be protected from the electric network.

The invention further relates to a frequency relay for frequency protection of a component in an electric network, the protective function of the frequency relay being based on frequency measurement, the frequency relay comprising an estimating device for determining an estimate for the electric network frequency on the basis of a measurement signal measured from the electric network, a filtering device for determining a filtered value of the frequency estimate, and a comparing device for comparing the filtered value of the frequency estimate to a predetermined starting threshold for underfrequency and/or a starting threshold for overfrequency, such that when the filtered value of the frequency estimate falls below the starting threshold for underfrequency or exceeds the starting threshold for overfrequency, a protective function is activated in order to disconnect the component to be protected from the network.

Protection relays based on measurement or estimation of frequency in an electric network are used to protect components connected to the network from variations of rated frequency occurring in the network, i.e. overfrequencies and underfrequencies. Typical objects protected by frequency relays include generators and large synchronous motors. When the frequency deviates too far from the rated frequency in the network, the object or component to be protected can be disconnected from the network by means of the relay. A frequency relay can also be used to disconnect entire sections of conductors from the network, for example when the network frequency falls as a load connected to the network exceeds the network power. A frequency relay compares the network frequency to predetermined set or starting values. The relay starts when the network frequency is either higher than the highest allowed frequency or lower than the lowest allowed frequency. If the network frequency remains outside the limits determined by the starting values for a predetermined period of time, the relay trips, and the component to be protected is disconnected from the network. Instead of or in addition to a measured or estimated frequency, the protective function of the frequency relay can be based on a frequency change rate determined as a difference of measured or estimated frequency values. Protection that is based on the frequency change rate rapidly disconnects the object to be protected from the network if the network frequency changes fast.

A problem with protection based on frequency and especially on the frequency change rate is the sensitivity of the protection to errors in the frequency estimate. If the accuracy of measurement of the frequency change rate should be for example 100 mHz/s, this means a frequency change of 2 mHz per one cycle in an electric network that operates at a rated frequency of 50 Hz. This requirement set for the accuracy of the frequency change rate measurement is considerably higher than the accuracy of 10 mHz typically required of frequency measurement. The frequency change rate is inherently more difficult to calculate than the frequency, since the former is calculated as a difference of the frequency, which means that high-frequency interference in a frequency estimate is amplified in the frequency change rate according to known properties of the difference. Due to its inherent sensitivity, the frequency change rate is subject to continuous, noise-like error caused by quantization noise resulting from sampling and the normal measurement noise of a measurement signal which represents or corresponds to a variable to be measured from the network, and which is used to determine the network frequency. On the other hand, a rapid phase shift in the variable to be measured, where the length of an individual cycle of the variable to be measured, such as a phase voltage, differs greatly from the other cycles, causes a momentary and possibly a very great error in the estimate for frequency and frequency rate change. If the measurement signal is filtered by a linear filter before estimation, the filtration also changes signal cycle lengths in points where the amplitude of the measurement signal changes rapidly, even though no actual phase or frequency change had originally occurred during an amplitude change. The filtration in a way transfers the zero crossings of the measurement signal, which are typically used to determine or estimate the basic frequency of the measurement signal. This variation in individual cycle lengths appears in the estimate for frequency and frequency change rate as an occasional but considerable error.

To improve the reliability of protection, the prior art arrangements filter both frequency estimates and estimates for frequency change rate in order to reduce the number of incorrect protective functions caused by interference. An incorrect protective function means that the protective relay has disconnected without cause the component to be protected from the network, or that the protective relay has not worked at all in an actual fault situation. Noise is typically eliminated linearly for example by an average value filter. Impulse-like interference is typically eliminated nonlinearly for example by a median filter. As a result of incorrect protective functions caused by impulse-like interference, different locking methods have also been developed to prevent the operation of protection in a situation where frequency estimates or estimates for frequency change rate are subject to impulse-like interference. Neither filtration manner by itself or even combined together is sufficient to eliminate uniform noise and impulse-like errors. An average value filter does eliminate the noise and a median filter eliminates impulse errors, but if a sufficiently accurate result is to be obtained, these filters cause too long a delay, or the frequency estimates should be more accurate originally. In an example disclosed in *Frequency Relaying Based on Instantaneous Frequency Measurement*, by Moore, Allmeling and Johns (IEEE Transactions on Power Delivery, Vol. 11, No. 4, 1996), the linear filtration alone must have been 200 ms and the trip delay produced by locking logic in connection with filtration must have been 300 ms. Even though frequency measurement is inherently more accurate than the measurement of frequency change rate, momentary changes in the measurement signal also cause problems in protection implemented merely on the basis of an estimated frequency.

An object of the present invention is to provide reliable frequency protection of a component in an electric network, based on frequency or frequency change rate.

The method according to the invention for filtering an estimate for frequency change rate is characterized by filtering the estimate for the frequency change rate by determining a restricted value of the estimate for the frequency change rate, and filtering the restricted value of the estimate for the frequency change rate by a digital filter.

Further, the frequency relay according to the invention, where the protective function is based on the frequency change rate, is characterized in that the filtering device comprises a restricting device for determining a restricted value of the estimate for the frequency change rate, and a digital filter for filtering the restricted value of the estimate for the frequency change rate.

Further, the method according to the invention for filtering a frequency estimate is characterized by filtering the frequency estimate by determining a restricted value of the frequency estimate, and by filtering the restricted value of the frequency estimate by a digital filter.

Furthermore, the frequency relay according to the invention, where the protective function is based on frequency measurement, is characterized in that the filtering device comprises a restricting device for determining a restricted value of the frequency estimate, and a digital filter for filtering the restricted value of the frequency estimate.

A basic idea of the invention is that in frequency protection of an electric network component, based on frequency change rate, an estimate for frequency change rate that has been determined by means of frequency estimates is filtered in a filtering device such that the first step comprises setting a restricted value of the estimate for frequency change rate between predetermined restrictive parameters for the rate of rise or rate of fall of frequency, and the second step comprises filtering the restricted value of the frequency change rate by a digital filter. The filtered value of the estimate for frequency change rate is compared to predetermined starting thresholds for the rate of fall and/or rate of rise of frequency, and when the filtered value of the estimate for frequency change rate falls below the starting value for the frequency rate of fall or exceeds the starting value for the rate of rise, a protective function is activated. The protective function refers to the activation of the protective relay when the filtered value of the estimate for frequency change rate exceeds the starting threshold, and to the triggering that possibly occurs after the activation to disconnect the component to be protected from the electric network, and the high-speed auto-reclosing and delayed auto-reclosing operations that possibly follow the triggering in a manner known per se. According to a preferred embodiment of the invention, the digital filter is an IIR filter. According to another preferred embodiment of the invention, the values of the restrictive parameters depend on the starting thresholds for frequency change rate. According to a third preferred embodiment of the invention, the operation of the filtering device is changed adaptively by altering adaptively the values of the restrictive parameters. The basic idea of the invention is identical also in frequency-based frequency protection of a component in an electric network.

An advantage of the invention is that the arrangement according to the invention implements reliable protection of an electric network component, based on frequency or frequency change rate, such that the protective relay is able to distinguish a frequency change caused by an abnormal state from a correct frequency change that requires protective measures. The arrangement according to the invention helps eliminate measurement noise from both frequency estimates and estimates for frequency change rate, thus improving accuracy, but simultaneously ensuring that the result does not react in an uncontrollable manner to short-term estimate values that differ greatly from the old value. However, the filtration result reacts in a required time to real, long-term estimates for frequency change rate that differ from the old value. Despite the resistance to impulse noise, filtration parameters can be adjusted such that the filtration result exceeds a predetermined level in a predetermined time if this exceeding of the level also occurs in the values to be filtered. In protection based on the frequency change rate, this can be applied such that the filter is adjusted to either fall below or exceed the starting threshold in a required starting time. This adjustment also affects the accuracy of the filtration result, i.e. the lower the starting threshold is adjusted, the more accurate the filtration result is. The final result of filtration can be adjusted to the correct value more rapidly by adaptively changing the operation of the filtering device on the basis of changes occurring in the variable to be measured.

The invention will be described in greater detail in the accompanying drawings, in which

Figure 1 is a schematic block diagram of a method according to the invention based on frequency change rate, and a frequency relay for protecting a component in an electric network,
Figure 2 shows schematically a preferred embodiment of the arrangement according to the invention,
Figure 3 is a schematic flowchart of the operating principle of a detail of the embodiment shown in Figure 2, and
Figure 4 shows schematically the operation of an arrangement according to the invention in a situation described as an example.

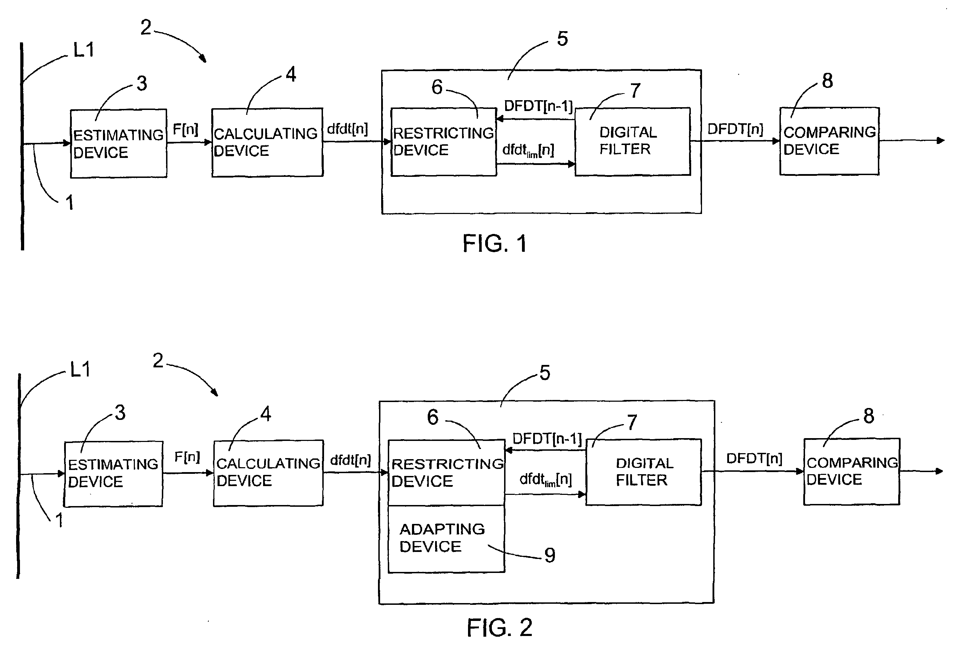

Figure 1 is a schematic block diagram of a method according to the invention based on frequency change rate, and a frequency relay for protecting a component in an electric network from basic frequency variations occurring in the network. In protection based on frequency change rate, it is possible to monitor both the rate of rise and the rate of fall of frequency. Figure 1 shows one phase L1 of a typically three-phase electric network, and a frequency relay 2 according to the invention connected thereto. The frequency relay 2 comprises an estimating device 3 for estimating or determining the frequency F of the electric network from a measurement signal 1 measured from the network. The network frequency is typically determined on the basis of phase voltage measurement, but the variable to be measured can also be the phase current. Frequency estimates F corresponding to different instants are used in a calculating device 4 to determine the frequency change rate dfdt in the network for different instants. In order that interference or momentary changes occurring in the variable to be measured would affect the operation of the frequency relay 2 as little as possible, the relay comprises a filtering device 5 for filtering the frequency change rate dfdt. The frequency relay 2 further comprises a comparing device 8, which compares the filtered frequency change rate DFDT to the predetermined starting thresholds $DFDT_{LowLimit}$ and $DFDT_{HighLimit}$ for frequency change rate set for the frequency relay 2. Starting threshold $DFDT_{LowLimit}$ corresponds to the greatest allowed rate of fall of the network frequency, and starting threshold $DFDT_{HighLimit}$ in turn corresponds to the greatest allowed rate of rise of the network frequency. In a normal situation the frequency change rate of the network is equal to or almost equal to zero. The starting thresholds $DFDT_{LowLimit}$ and $DFDT_{HighLimit}$ for the frequency change rate are thus located on both sides of zero, and in a normal situation the value of the filtered frequency change rate is between the starting thresholds $DFDT_{LowLimit}$ and $DFDT_{HighLimit}$. If the network frequency changes either upwards or downwards faster than what is allowed by the starting thresholds $DFDT_{LowLimit}$ and $DFDT_{HighLimit}$, the frequency relay 2 starts. If the frequency change rate falls below or exceeds the starting thresholds $DFDT_{LowLimit}$ and $DFDT_{HighLimit}$ for a predetermined period of time, the frequency relay 2 trips, i.e. it commands an actuator, which is not shown in Figure 1 for the sake of clarity, to disconnect the component to be protected from the network. The time between the activation and the tripping can be set in several manners, and it can also be based on the extent to which a value exceeds or falls below the limits.

A measurement signal 1 consists of discrete samples taken from the variable to be measured at a predetermined sampling frequency, and the samples are used to determine a frequency estimate F in a manner known per se based on either the rotation of a signal phasor or the zero crossings of the measured variable 1. Frequency estimates corresponding to discrete instants (n, n-1, n-2, ...) can be denoted by (F[n], F[n-1], F[n-2], ...). A signal phasor is usually calculated by a discrete Fourier transform (DFT), in which case the variable to be measured can also be the main voltage. In calculation of a frequency estimate F based on the zero crossings of the variable to be measured, the measurement signal 1 is searched for points where the sign of the measurement signal 1 changes. The cycle length of the measurement signal 1 is obtained by calculating the time it has taken to exceed any one of the preceding zero points, and dividing it by the number of cycles in the interval in question. A frequency estimate F is in turn an inverse of the cycle length. The calculation of the frequency F of the measurement signal 1 based on the zero crossings can be specified by interpolating, in a manner known per se, the exact zero point of the measurement signal 1 between the samples that occur around the zero point of the measurement signal 1. The interpolation can be multi-degree polynomial interpolation, which in its simplest form is linear interpolation. Before the frequency F is estimated, the measurement signal 1 can be filtered for example by a linear digital filter, which retains the basic-frequency component of the measurement signal 1 but attenuates interfering frequencies.

The frequency change rate dfdt at instant *n*, or dfdt[n], can be calculated as a difference of two nonsimultaneous frequency estimates F[n] and F[n-M]:

$$dfdt[n] = (F[n] - F[n-M]) / T_M, \tag{1}$$

where M is the delay between frequency estimates F[n] and F[n-M] in indices, and $T_M$ is the time corresponding to delay M. The frequency change rate dfdt used typically in relay protection is calculated as a difference of two successive frequency estimates, so that the value of delay M in formula (1) is one. The delay M between the frequency estimates depends on the implementation, and it can also be adjustable, as disclosed in the publication ALSTOM, 1999, "MiCOM P940 Series Frequency Relays: Frequency supervised average rate of change of frequency", where the user can set the length of the time window over which the frequency change rate dfdt is calculated.

In the arrangement according to the invention, the effect of both noise and impulse-like interference on the operation of the protection is diminished by filtering the frequency change rate dfdt determined in a calculating device 4 by a filtering device 5, which comprises a restricting device 6 for determining the restricted value $dfdt_{lim}$ of the frequency change rate, and an IIR filter 7 for filtering the restricted frequency change rate $dfdt_{lim}$. The restricted value $dfdt_{lim}$ of the frequency change rate can be filtered by means of several different types of filters, but the filter is preferably an IIR filter. In the restricting device 6, the frequency change rate dfdt[n] corresponding to a discrete instant *n* is restricted to an interval $DFDT[n-1] - d_{low}....DFDT[n-1] + d_{high}$ as follows:

$$dfdt_{lim}[n] = dfdt[n], \quad \begin{cases} DFDT[n\text{-}1] + d_{high}, & \text{if } dfdt[n] > DFDT[n\text{-}1] + d_{high} \\ & \text{if } DFDT[n\text{-}1] - d_{low} \leq dfdt[n] \\ & \text{and } dfdt[n] \leq DFDT[n\text{-}1] + d_{high} \\ DFDT[n\text{-}1] - d_{low}, & \text{if } dfdt[n] < DFDT[n\text{-}1] - d_{low} \end{cases} \tag{2}$$

where $dfdt_{lim}[n]$ is the restricted value corresponding to the frequency change rate dfdt[n], DFDT[n-1] is the filtered value corresponding to the previous frequency change rate dfdt[n-1], $d_{low}$ is the adjustable restrictive parameter for the rate of fall of the estimate for the frequency change rate, and $d_{high}$ is the adjustable restrictive parameter for the rate of rise of the estimate for the frequency change rate. The filtered value DFDT[n] of the frequency change rate dfdt[n] corresponding to instant *n* is obtained by filtering the restricted value $dfdt_{lim}[n]$ of the frequency change rate by an IIR filter as follows:

$$DFDT[n] = a * dfdt_{lim}[n] + (1 - a) * DFDT[n-1], \tag{3}$$

where *a* is a fixed filter parameter. The IIR filter of formula (3) is a first degree filter, but a filter of a higher degree can also be used. The filtered value DFDT[n] of the frequency change rate dfdt[n] is compared in a comparing device 8 to the starting values $DFDT_{LowLimit}$ and $DFDT_{HighLimit}$ of the frequency relay 2. The filtered value DFDT[n] is further used to calculate the restricted value $dfdt_{lim}[n+1]$ of the next frequency change rate dfdt[n+1]. The arrangement according to the invention helps diminish, in an easy, simple and more effective manner than the prior art methods, the effect of noise and impulse-like interference occurring in the measurement signal 1 either in the original variable to be measured or added thereto during the measurement on the filtered value DFDT of the frequency change rate dfdt, so that the frequency protection based on the frequency change rate becomes more reliable than previously.

Correct operation and sufficient reaction rate of the filtering device 5 can be guaranteed by the accurate selection of the restrictive parameters $d_{low}$ and $d_{high}$ of the restricting device 6 and the coefficient *a* of the IIR filter 7. The selection of the restrictive parameters $d_{low}$ and $d_{high}$ and the coefficient a and the operation of the filtering device 5 can be examined by means of a situation where the frequency F of the measurement signal 1 has been constant until instant *k*, i.e. the frequency change rate dfdt has been zero until instant *k*. The frequency F of the measurement signal 1 thereafter increases so rapidly that the new frequency change rate dfdt[k+m] at instant *k+m* (when examining a situation where the *k*th value is followed by *m* values) is always greater than the corresponding restrictive clause $DFDT[k+m-1] + d_{high}$. The restricted value $dfdt_{lim}[k+m]$ of the frequency change rate $dfdt[k+m]$ will be $DFDT[k+m-1] + d_{high}$, in accordance with the conditions of formula (2), and the filtered value of the frequency change rate $dfdt[k+m]$ is as follows:

$$DFDT[k + m] = a^* (DFDT[k + m - 1] + d_{high}) + (1 - a)^* DFDT[k + m - 1]$$
$$= a^* d_{high} + DFDT[k + m - 1]. \qquad (4)$$

Since hypothetically all the values $dfdt[k+l]$ of the frequency change rate after instant *k* until instant *k+m* (l = 1...m-1) have exceeded the restrictive clause $DFDT[k+l-1] + d_{high}$, a formula similar to formula (4) can be applied thereto as follows

$$DFDT[k + l] = a^* d_{high} + DFDT[k + l-1], \qquad (5)$$

so that we obtain, based on induction,

$$DFDT[k + m] = a^* m^* d_{high} + DFDT[k]. \qquad (6)$$

Since the frequency change rate $DFDT[k]$ at instant *k* was hypothetically zero, it follows that

$$DFDT[k+m] = a^* m^* d_{hign}. \qquad (7)$$

The filtration result thus increases and finds its way to a new value linearly at rate $a^* d_{high}$, until the restrictive clause $dfdt[n] > DFDT[n-1] + d_{high}$ is no longer valid, whereafter the filtering device 5 operates according to the one-stage IIR filter shown in formula (3).

According to linear growth, the restrictive parameters $d_{low}$ and $d_{high}$ can be selected, as shown in formula (8), depending on the starting thresholds $DFDT_{LowLimit}$ and $DFDT_{HighLimit}$ of the frequency relay 2, and coefficient a of the IIR filter 7 can be kept constant so that the filtered value DFDT of the frequency change rate falls below or exceeds the current starting threshold $DFDT_{LowLimit}$ or $DFDT_{HighLimit}$ in a starting time, i.e.

$$d_{high} = DFDT_{HighLimit}/ (N * a)$$

$$d_{low} = DFDT_{LowLimit}/ (N * a), \qquad (8)$$

where N is the number of frequency estimates F in a desired starting time. This selection of restrictive parameters $d_{low}$ and $d_{high}$ also ensures that the filtered value cannot fall below starting threshold $DFDT_{LowLimit}$ or exceed starting threshold $DFDT_{HighLimit}$ until the starting time expires, no matter how high the frequency change rate dfdt momentarily is. This makes the filtration of the frequency change rate dfdt resistant to interference. The coefficient a of the IIR filter 7 can be selected such that the filter efficiently attenuates the noise of the frequency change rate dfdt. The restrictive parameters $d_{low}$ and $d_{high}$ can then be a great deal smaller than the starting thresholds $DFDT_{LowLimit}$ and $DFDT_{HighLimit}$ for protection, i.e. the upper limit can be used to derive the following formula (the same applies to the lower limit):

$$d_{high} \ll DFDT_{HighLimit}$$
$$\Rightarrow \quad DFDT_{HighLimit} / (N * a) \ll DFDT_{HighLimit}$$
$$\Rightarrow \quad 1/(N * a) \ll 1 \qquad (9)$$
$$\Rightarrow \quad 1/N \ll a$$

In other words, the coefficient a of the IIR filter 7 must be clearly greater than the magnitude of the inverse 1/N of the new frequency estimates F in a desired starting time.

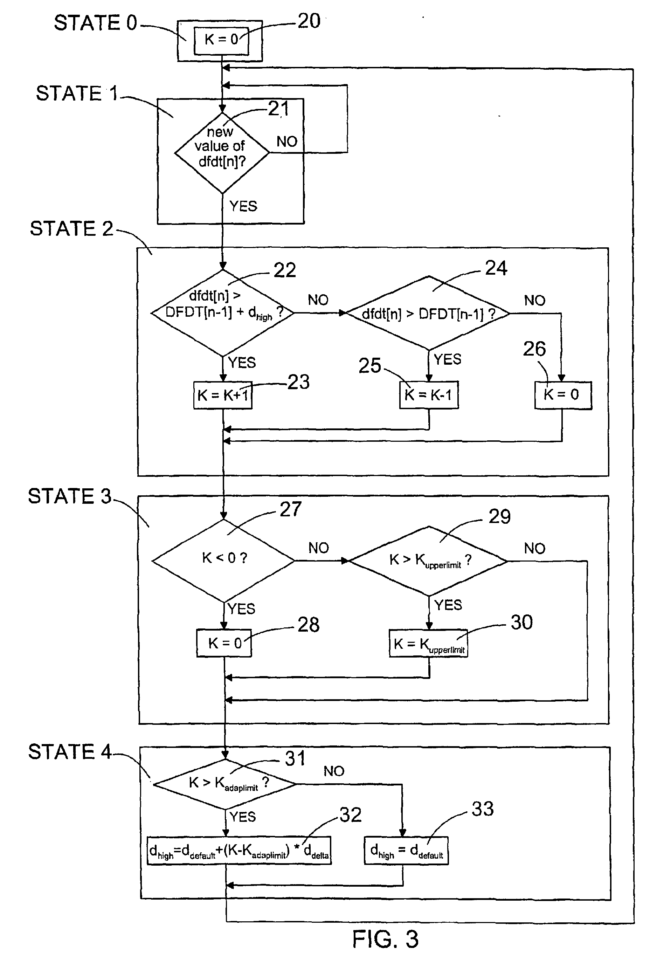

In the arrangement according to the invention disclosed above, when the actual frequency change rate dfdt is for example 5 Hz/s and the upper starting threshold $DFDT_{HighLimit}$ is for example 1 Hz/s, the filtered value DFDT of the frequency change rate dfdt reaches the starting threshold $DFDT_{HighLimit}$ in a starting time T, but it only reaches the correct frequency change rate 5 Hz/s in time 5T. The final result of filtration reaches the correct frequency change rate more rapidly if each restrictive parameter $d_{low}$ and $d_{high}$ for the frequency change rate dfdt is adapted separately. Adaptation is preferably carried out such that the restrictive parameter $d_{low}$ or $d_{high}$ of the frequency change rate dfdt is increased if the restrictive clause of formula (2) recurs several times in succession. If the restrictive clause is not satisfied, the increased limit is reduced, i.e. the restrictive parameter $d_{low}$ or $d_{high}$ is decreased, but not below the original value. The value of the restrictive parameter $d_{low}$ or $d_{high}$ is returned directly to the original value, if the frequency change rate dfdt[n] determined at instant n deviates from the old filtration result DFDT[n-1] in the opposite direction from the direction in which the restrictive parameter $d_{low}$ or $d_{high}$ was increased. The immediate result is that only one restrictive parameter $d_{low}$ or $d_{high}$ can be adapted at once. The restrictive parameter $d_{low}$ and $d_{high}$ can be increased in several manners, but the simplest way is to increase the parameter with a constant term. The adaptation is carried out in an adapting device 9, which is provided in the filtering device 5 in connection with the restricting device 6, which is shown schematically in Figure 2. The operation of the adapting device 9 is shown in Figure 3 in the form of a flowchart-type state diagram. Figure 3 shows schematically adaptation of the restrictive parameter $d_{high}$ for the starting threshold $DFDT_{HighLimit}$. The restrictive parameter $d_{high}$ is increased by a constant term $d_{delta}$. As regards the restrictive parameter $d_{low}$ of the starting threshold $DFDT_{LowLimit}$ for the frequency change rate, the operation is analogous, but they can naturally be combined by software.

State 0. Initial state:

In the initial state, the value of a restrictive counter K is set 20 to zero. The restrictive counter K calculates how many times the conditional statement dfdt[n] > DFDT[n-1] + $d_{high}$ of formula (2) is satisfied. After the restrictive counter K has been reset, the process moves to state 1.

State 1. Waiting for a new value of the frequency change rate dfdt[n]:

State 1 comprises waiting 21 until a new value of the frequency change rate dfdt has been determined in the calculating device 4 and forwarded to the filtering device 5, whereafter the adapting device 9 moves to state 2.

State 2. Updating the restrictive counter K:

In state 2, it is compared 22 whether the new value of the frequency change rate dfdt[n] fulfills the condition dfdt[n] > DFDT[n-1] + $d_{high}$. If this condition is true, the value of the restrictive counter K is incremented 23 by one, whereafter the process moves to state 3. If the condition dfdt[n] > DFDT[n-1] + $d_{high}$ is not satisfied, it is compared 24 whether the value exceeds the filtered value DFDT[n-1] of the previous frequency change rate dfdt[n-1]. If this condition is satisfied, the value of the counter K is decremented 25 by one, and the process moves to state 3. If the value dfdt[n] is smaller than or equal to the previous filtered value DFDT[n-1], the restrictive counter K is set to zero, whereafter the process moves to state 3.

State 3. Restricting the value of the restrictive counter K:

State 3 comprises restricting the value of the restrictive counter K. It is first compared 27 whether the value of the restrictive counter K is less than zero. If this condition is satisfied, the restrictive counter K is set 28 to zero, and the process moves to state 4. If the condition is not satisfied, it is compared 29 whether the value of the restrictive counter K exceeds an upper limit $K_{upperlimit}$ predetermined for the restrictive counter K. If this condition is satisfied, the value of the restrictive counter K is set 30 to the upper limit $K_{upperlimit}$, whereafter the process moves to state 4. In other cases the process moves directly to state 4. The upper limit $K_{upperlimit}$ of the restrictive counter K can be selected for example such that the value of the restrictive parameter $d_{high}$ after the update is half of the starting threshold $DFDT_{HighLimit}$ for the rate of rise of the frequency change rate.

State 4. Updating the value of restrictive parameter $d_{high}$:

State 4 comprises updating the value of the restrictive parameter $d_{high}$ for the upper limit of the frequency change rate dfdt. In state 4, it is first compared 31 whether the value of the restrictive counter K is greater than a predetermined value of an adaptation counter $K_{adaplimit}$, i.e. whether the conditional statement dfdt[n] > DFDT[n-1] + $d_{high}$ disclosed in formula (2) has been exceeded so many times that the value of the restrictive parameter $d_{high}$ should be updated. If the value of the restrictive counter K exceeds the value of the adaptation counter $K_{adaplimit}$, the value of the restrictive parameter $d_{high}$ is altered 32 according to the following expression

$$d_{high} = d_{default} + (K - K_{adaplimit}) * d_{delta} \qquad (10)$$

In other cases the value of the restrictive parameter $d_{high}$ is returned 33 to the default value $d_{default}$. The default value or initial value $d_{default}$ of the restrictive parameter $d_{high}$ is determined from the starting threshold $DFDT_{HighLimit}$ according to formula (8). The change step $d_{delta}$ of the restrictive parameter $d_{high}$ is determined experimentally such that the filtration operates at a desired rate. The basic value for the change step $d_{delta}$ is $d_{default}$. After the restrictive parameter $d_{high}$ has been updated, the process returns to state 1 to wait for the next value dfdt[n+1] of the frequency change rate.

When the operation of the protective relay is based on an estimated frequency F and not on the frequency change rate dfdt, the arrangement according to the invention is the same, except that the calculating device 4 shown in Figures 1 and 2 for calculating an estimate for the frequency change rate becomes unnecessary. In such a case, the restricted value of the estimated frequency F can be denoted for example by $F_{lim}$ and the filtered value for example by FT. When frequency estimates F are filtered, it is not necessary to bind the restrictive parameter $d_{high}$ of the rising step and the restrictive parameter $d_{low}$ of the falling step to the set limits of protection, i.e. the starting threshold $FT_{HighLimit}$ for the overfrequency protection and the starting threshold $FT_{LowLimit}$ for the underfrequency protection, but the values of the restrictive parameters $d_{low}$ and $d_{high}$ can also be calculated by using possible set values that are closest to the rated frequency. This is possible since the noise of the frequency estimates F is far lower than the noise of the estimates dfdt for the frequency change rate. In other respects the frequency estimates F can be filtered similarly as the estimates dfdt for the frequency change rate.

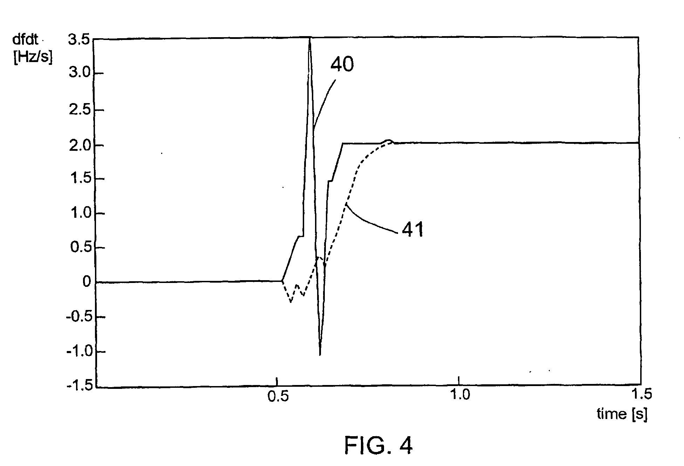

Figure 4 shows schematically the operation of the arrangement according to the invention in a situation disclosed as an example. In Figure 4, the frequency change rate dfdt was originally 0 Hz/s. At an instant of about 0.5 s, the phase voltage exhibited a 20% amplitude peak, and the frequency simultaneously started increasing at a rate of 2 Hz/s. The frequency change rate dfdt is determined according to formula (1) when the value of delay M is one, i.e. based on two successive frequency estimates F. The frequency F estimates in turn are determined based on zero crossings of the measurement signal. A continuous line 40 shows a frequency change rate DFDT filtered by a prior art arrangement, i.e. a median and an average value filter. A broken line 41 shows a frequency change rate DFDT filtered by the arrangement according to the invention. Figure 4 clearly shows that the frequency change rate filtered by the arrangement according to the invention follows accurately the actual frequency change rate 2 Hz/s and does not react substantially to the amplitude peak. On the other hand, the prior art arrangement reacts very strongly to the amplitude peak and causes an incorrect protective function.

The drawings and the related description are only intended to illustrate the inventive idea. The details of the invention can vary within the scope of the claims. The arrangement according to the invention can be implemented irrespective of the variable to be usually measured from the electric network and the method that are used to determine or estimate the frequency F or the frequency change rate dfdt. The filtration has to be adjusted differently for different estimation methods, since different methods provide results at different rates, and interference or changes in the measurement signal affect the result in different ways and for a different period of time depending on the manner of estimation. For example estimation based on zero points of a measurement signal produces a new result only with a sample that succeeds the zero points, and linear filtration of the measurement signal by a digital filter before frequency and frequency change estimation affects the impact and duration of interference and signal changes.

## Claims

1. A method of filtering an estimate for frequency change rate in frequency protection of a component in an electric network, the frequency protection comprising determining an estimate (F) for network frequency on the basis of a measurement signal (1) measured from the electric network, calculating an estimate (dfdt) for frequency change rate on the basis of two non-simultaneous frequency estimates (F), filtering the estimate (dfdt) for the frequency change rate, comparing the filtered estimate (DFDT) for the frequency change rate to a predetermined starting threshold ($DFDT_{HighLimit}$) for the rate of rise of the frequency change rate and/or to a starting threshold ($DFDT_{LowLimit}$) for the rate of fall, and when the filtered estimate (DFDT) for the frequency change rate falls below the starting threshold ($DFDT_{LowLimit}$) for the rate of fall of the frequency change rate or exceeds the starting threshold ($DFDT_{HighLimit}$) for the rate of rise, a protective function is activated in order to disconnect the component to be protected from the electric network, **characterized by** filtering the estimate (dfdt) for the frequency change rate by determining a restricted value (dfdt$_{lim}$) of the estimate (dfdt) for the frequency change rate, and filtering the restricted value (dfdt$_{lim}$) of the estimate for the frequency change rate by a digital filter (7).

2. A method according to claim 1, **characterized by** determining the restricted value (dfdt$_{lim}$) of the estimate (dfdt) of the frequency change rate from the formula

$$dfdt_{lim}[n] = \begin{cases} DFDT[n-1] + d_{high}, & \text{if } dfdt[n] > DFDT[n-1] + d_{high} \\ dfdt[n], & \text{if } DFDT[n-1] - d_{low} \leq dfdt[n] \\ & \text{and } dfdt[n] \leq DFDT[n-1] + d_{high} \\ DFDT[n-1] - d_{low}, & \text{if } dfdt[n] < DFDT[n-1] - d_{low} \end{cases}$$

where dfdt[n] is the estimate for the frequency change rate at a discrete instant *n,* DFDT[n-1] is a filtered value of the estimate for the frequency change rate corresponding to a discrete instant *n-1*, d$_{low}$ is an adjustable restrictive parameter for the rate of fall of the estimate for the frequency change rate, and d$_{high}$ is an adjustable restrictive parameter for the rate of rise of the estimate for the frequency change rate.

3. A method according to claim 2, **characterized by** setting the restrictive parameter (d$_{low}$) for the rate of fall and/or the restrictive parameter (d$_{high}$) for the rate of rise such that the filtered value (DFDT) of the estimate (dfdt) for the frequency change rate falls below the starting threshold (DFDT$_{LowLimit}$) for the rate of fall or exceeds the starting threshold (DFDT$_{HighLimit}$) for the rate of rise in a starting time.

4. A method according to claim 2 or 3, **characterized by** changing the restrictive parameter (d$_{low}$) for the rate of fall and/or the restrictive parameter (d$_{high}$) for the rate of rise adaptively based on the estimate (dfdt) for the frequency change rate.

5. A method according to claim 4, **characterized by** changing the restrictive parameter (d$_{low}$) for the rate of fall and/or the restrictive parameter (d$_{high}$) for the rate of rise by means of a constant term (d$_{delta}$) or a multiple thereof.

6. A method of filtering a frequency estimate in frequency protection of a component in an electric network, the frequency protection comprising determining an estimate (F) for the network frequency on the basis of a measurement signal (1) measured from the electric network, filtering the frequency estimate (F), comparing the filtered frequency estimate (FT) to a predetermined starting threshold (FT$_{HighLimit}$) for overfrequency and/or to a starting threshold (FT$_{LowLimit}$) for underfrequency, and when the filtered frequency estimate (FT) falls below the starting threshold (FT$_{LowLimit}$) for underfrequency or exceeds the starting threshold (FT$_{HighLimit}$) for overfrequency, a protective function is activated in order to disconnect the component to be protected from the electric network, **characterized by** filtering the frequency estimate (F) by determining a restricted value (F$_{lim}$) of the frequency estimate, and by filtering the restricted value (F$_{lim}$) of the frequency estimate by a digital filter (7).

7. A method according to claim 6, **characterized by** determining the restricted value (F$_{lim}$) of the frequency estimate (F) from the formula

$$F_{lim}[n] = \begin{cases} FT[n-1] + d_{high}, & \text{if } F[n] > FT[n-1] + d_{high} \\ F[n], & \text{if } FT[n-1] - d_{low} \leq F[n] \\ & \text{and } F[n] \leq FT[n-1] + d_{high} \\ FT[n-1] - d_{low}, & \text{if } F[n] < FT[n-1] - d_{low} \end{cases}$$

where F[n] is the frequency estimate at a discrete instant *n*, FT[n-1] is the filtered value of the frequency estimate corresponding to a discrete instant *n-1*, d$_{low}$ is the adjustable restrictive parameter for the falling step of the frequency estimate, and d$_{high}$ is the adjustable restrictive parameter for the rising step of the frequency estimate.

EP 1 193 823 A2

**8.** A method according to claim 7, **characterized by** setting the restrictive parameter ($d_{low}$) for the falling step and/or the restrictive parameter ($d_{high}$) for the rising step such that the filtered value (FT) of the frequency estimate (F) falls bellow the starting threshold ($FT_{LowLimit}$) for underfrequency or exceeds the starting threshold ($FT_{HighLimit}$) for overfrequency in a starting time.

**9.** A method according to claim 7, **characterized by** setting the restrictive parameter ($d_{low}$) for the falling step and/or the restrictive parameter ($d_{high}$) for the rising step on the basis of set values that are closest to the rated frequency.

**10.** A method according to any one of claims 7 to 9, **characterized by** changing the restrictive parameter ($d_{low}$) for the falling step and/or the restrictive parameter ($d_{high}$) for the rising step adaptively based on the frequency estimate (F).

**11.** A method according to claim 10, **characterized by** changing the restrictive parameter ($d_{low}$) for the falling step and/or the restrictive parameter ($d_{high}$) for the rising step by means of a constant term ($d_{delta}$) or a multiple thereof.

**12.** A method according to any one of the preceding claims, **characterized in that** the digital filter is an IIR filter.

**13.** A method according to claim 12, **characterized in that** the IIR filter is a first degree filter.

**14.** A method according to any one of the preceding claims, **characterized by** determining the frequency estimate (F) on the basis of zero crossings of a measurement signal (1).

**15.** A method according to any one of the preceding claims, **characterized in that** before the frequency estimate (F) is determined, the measurement signal (1) is filtered by a linear digital filter.

**16.** A method according to any one of the preceding claims, **characterized in that** the measurement signal (1) is the phase voltage of the electric network.

**17.** A frequency relay for frequency protection of a component in an electric network, the protective function of the frequency relay (2) being based on the frequency change rate, the frequency relay (2) comprising an estimating device (3) for determining an estimate (F) for the network frequency on the basis of a measurement signal (1) measured from the electric network, a calculating device (4) for calculating an estimate (dfdt) for the frequency change rate on the basis of two nonsimultaneous frequency estimates (F), a filtering device (5) for determining the filtered value (DFDT) of the estimate (dfdt) for the frequency change rate, and a comparing device (8) for comparing the filtered value (DFDT) of the estimate (dfdt) for the frequency change rate to a predetermined starting threshold ($DFDT_{LowLimit}$) for the rate of fall of the estimate for the frequency change rate and/or to a starting threshold ($DFDT_{HighLimit}$) for the rate of rise, such that when the filtered value (DFDT) of the estimate (dfdt) for the frequency change rate falls below the starting threshold ($DFDT_{LowLimit}$) for the rate of fall or exceeds the starting threshold ($DFDT_{HighLimit}$) for the rate of rise, a protective function is activated in order to disconnect the component to be protected from the network, **characterized in that** the filtering device (5) comprises a restricting device (6) for determining a restricted value ($dfdt_{lim}$) of the estimate (dfdt) for the frequency change rate, and a digital filter (7) for filtering the restricted value ($dfdt_{lim}$) of the estimate (dfdt) for the frequency change rate.

**18.** A frequency relay according to claim 17, **characterized in that** in order to determine the restricted value ($dfdt_{lim}$) of the estimate (dfdt) for the frequency change rate, the restricting device (9) satisfies the condition

$$dfdt_{lim}[n] = \begin{cases} DFDT[n-1] + d_{high}, & \text{if } dfdt[n] > DFDT[n-1] + d_{high} \\ dfdt[n], & \text{if } DFDT[n-1] - d_{low} \leq dfdt[n] \\ & \text{and } dfdt[n] \leq DFDT[n-1] + d_{high} \\ DFDT[n-1] - d_{low}, & \text{if } dfdt[n] < DFDT[n-1] - d_{low} \end{cases}$$

where dfdt[n] is the frequency estimate for the frequency change rate at a discrete instant *n,* DFDT[n-1] is the filtered value of the estimate for the frequency change rate corresponding to a discrete instant *n-1,* $d_{low}$ is the adjustable restrictive parameter for the rate of fall of the estimate for the frequency change rate, and $d_{high}$ is the adjustable restrictive parameter for the rate of rise of the estimate for the frequency change rate.

**19.** A frequency relay according to claim 18, **characterized in that** the restrictive parameter ($d_{low}$) for the rate of fall and/or the restrictive parameter ($d_{high}$) for the rate of rise are set such that the filtered value (DFDT) of the estimate (dfdt) for the frequency change rate falls bellow the starting threshold ($DFDT_{LowLimit}$) for the rate of fall or exceeds the starting threshold ($DFDT_{HighLimit}$) for the rate of rise in a starting time.

**20.** A frequency relay according to claim 18 or 19, **characterized in that** the filtering device (5) comprises an adapting device (9) for setting the restrictive parameter ($d_{low}$) for the rate of fall and/or the restrictive parameter ($d_{high}$) for the rate of rise adaptively based on the estimate (dfdt) for the frequency change rate.

**21.** A frequency relay according to claim 20, **characterized in that** the adapting device (9) is arranged to change the restrictive parameter ($d_{low}$) for the rate of fall and/or the restrictive parameter ($d_{high}$) for the rate of rise by means of a constant term ($d_{delta}$) or a multiple thereof.

**22.** A frequency relay for frequency protection of a component in an electric network, the protective function of the frequency relay (2) being based on frequency measurement, the frequency relay (2) comprising an estimating device (3) for determining an estimate (F) for the electric network frequency on the basis of a measurement signal (1) measured from the electric network, a filtering device (5) for determining a filtered value (FT) of the frequency estimate (F), and a comparing device (8) for comparing the filtered value (FT) of the frequency estimate (F) to a predetermined starting threshold ($FT_{LowLimit}$) for underfrequency and/or a starting threshold ($FT_{HighLimit}$) for overfrequency, such that when the filtered value (FT) of the frequency estimate (F) falls below the starting threshold ($FT_{LowLimit}$) for underfrequency or exceeds the starting threshold ($FT_{HighLimit}$) for overfrequency, a protective function is activated in order to disconnect the component to be protected from the network, **characterized in that** the filtering device (5) comprises a restricting device (6) for determining a restricted value ($F_{lim}$) of the frequency estimate (F), and a digital filter (7) for filtering the restricted value ($F_{lim}$) of the frequency estimate (F).

**23.** A frequency relay according to claim 22, **characterized in that** in order to determine the restricted value ($F_{lim}$) of the frequency estimate (F), the restricting device (9) satisfies the condition

$$F_{lim}[n] = \begin{cases} FT[n-1] + d_{high}, & \text{if } F[n] > FT[n-1] + d_{high} \\ F[n], & \text{if } FT[n-1] - d_{low} \leq F[n] \\ & \text{and } F[n] \leq FT[n-1] + d_{high} \\ FT[n-1] - d_{low}, & \text{if } F[n] < FT[n-1] - d_{low} \end{cases}$$

where F[n] is the frequency estimate at a discrete instant *n*, FT[n-1] is the filtered value of the frequency estimate corresponding to a discrete instant *n-1*, $d_{low}$ is the adjustable restrictive parameter for the falling step of the frequency estimate, and $d_{high}$ is the adjustable restrictive parameter for the rising step of the frequency estimate.

**24.** A frequency relay according to claim 23, **characterized in that** the restrictive parameter ($d_{low}$) for the falling step and/or the restrictive parameter ($d_{high}$) for the rising step are set such that the filtered value (FT) of the frequency estimate (F) falls bellow the starting threshold ($FT_{LowLimit}$) for underfrequency or exceeds the starting threshold ($FT_{HighLimit}$) for overfrequency in a starting time.

**25.** A frequency relay according to claim 23, **characterized in that** the restrictive parameter ($d_{low}$) for the falling step and/or the restrictive parameter ($d_{high}$) for the rising step are set based on set values that are closest to the rated frequency.

**26.** A frequency relay according to any one of claims 23 to 25, **characterized in that** the filtering device (5) comprises an adapting device (9) for setting the restrictive parameter ($d_{low}$) for the falling step and/or the restrictive parameter ($d_{high}$) for the rising step adaptively based on the frequency estimate (F).

**27.** A frequency relay according to claim 26, **characterized in that** the adapting device (9) is arranged to change the restrictive parameter ($d_{low}$) for the falling step and/or the restrictive parameter ($d_{high}$) for the rising step by means of a constant term ($d_{delta}$) or a multiple thereof.

**28.** A frequency relay according to any one of claims 17 to 27, **characterized in that** the digital filter (7) is an IIR filter.

**29.** A frequency relay according to claim 28, **characterized in that** the IIR filter is a first degree filter.

**30.** A frequency relay according to any one of claims 17 to 29, **characterized in that** an estimating device (3) is arranged to determine a frequency estimate (F) on the basis of zero crossings of a measurement signal (1).

**31.** A frequency relay according to any one of claims 17 to 30, **characterized in that** the frequency relay (2) comprises a linear digital filter for filtering the measurement signal (1) before a frequency estimate (F) is determined.

**32.** A frequency relay according to any one of claims 17 to 31, **characterized in that** the measurement signal (1) is the phase voltage of the electric network.

EP 1 193 823 A2

**FIG. 1**

**FIG. 2**

FIG. 3

FIG. 4